# EUROPÄISCHE PATENTSCHRIFT

(11) **EP 3 650 184 B1**
(45) Veröffentlichungstag und Bekanntmachung des Hinweises auf die Patenterteilung: **18.12.2024**
(21) Anmeldenummer: 19208029.9
(22) Anmeldetag: 08.11.2019
(51) Int. Cl.: B27N 1/00, B27N 3/14, B27N 3/18, B27N 5/00, B27N 5/02, B29C 53/56, B29C 64/147, B29C 70/38

(54) **VERFAHREN ZUR HERSTELLUNG VON BAUTEILEN AUS MASSIVHOLZ, ENDLOSSTRANG AUS MASSIVHOLZ FÜR DIESES VERFAHREN UND DAMIT HERGESTELLTES MASSIVHOLZBAUTEIL**
METHOD FOR PRODUCING COMPONENTS MADE FROM SOLID WOOD, ENDLESS STRAND MADE FROM SOLID WOOD FOR THIS METHOD AND SOLID WOOD COMPONENT PRODUCED WITH SAME
PROCÉDÉ DE FABRICATION DE COMPOSANTS EN BOIS PLEIN, BARRE CONTINUE EN BOIS PLEIN DESTINÉE AUDIT PROCÉDÉ ET COMPOSANT EN BOIS PLEIN FABRIQUÉ SELON LEDIT PROCÉDÉ

(30) Priorität: 08.11.2018 DE 102018127956
(43) Veröffentlichungstag der Anmeldung: 13.05.2020
(73) Patentinhaber: Universität Kassel, 34125 Kassel (DE)
(72) Erfinder: Kohl, Daniel, 36205 Sontra (DE); Deetman, Aart Harmen, 34121 Kassel (DE); Heise, Jannis, 34125 Kassel (DE); Silbermann, Stefanie, 13357 Berlin (DE); Klussmann, Heike, 10178 Berlin (DE); Dawod, Mohamed, 34125 Kassel (DE); Eversmann, Philipp, 80339 München (DE); Böhm, Stefan, 38179 Schwülper (DE); Akbar, Zuardin, 34109 Kassel (DE)
(74) Vertreter: Walther Bayer Faber Patentanwälte PartGmbB

(56) Entgegenhaltungen:
- US-A1- 2005 161 146
- US-A1- 2016 009 069
- US-A1- 2016 332 369
- US-A1- 2018 162 045

## Beschreibung

Die Erfindung betrifft ein Verfahren zur additiven Herstellung von räumlichen Bauteilen aus Holz und ein Holzbauteil aus miteinander verklebten Endlossträngen aus Massivholz, das nach dem vorgenannten Verfahren hergestellt ist.

Die DE 10 2008 027 706 A1 offenbart einen Industrieroboter zum Legen von Furnieren und/oder Folien zu Schichtpaketen oder zu einem endlosen Strang im Zuge der Herstellung von Furnierschicht- oder Sperrholzplatten.

Additive Herstellungsmethoden ermöglichen die Fertigung von dreidimensionalen Produkten durch das schichtweise Auftragen von Werkstoffen. Erste Versuche dazu wurden bereits in den achtziger Jahren durchgeführt. Die additive Fertigung ist auch unter dem Begriff "3D-Drucken" bekannt.

Die aktuell am weitesten entwickelten Verfahren sind pulverbasierte Prozesse, Extrusions- und Photopolymerisationsverfahren. In pulverbasierten Prozessen wird schichtweise Pulver aufgetragen und mittels Laser in eine definierte Kontur geschmolzen (Laser Powder Bed Fusion L-PBF). Im Extrusionsverfahren werden thermoplastische Kunststoffe über eine beheizte Düse verformbar gemacht und ebenfalls schichtweise aufgetragen (Fused Deposition Modeling FDM). Beim Photopolymerisationsverfahren werden flüssige photoempfindliche Harze aufgetragen und durch UV-Strahlung oder Wärme verfestigt.

Gemäß der CN 103 665 905 A kann Holz als fein gemahlenes Pulver in Verbund mit Polymeren im FDM-Verfahren aufgetragen werden. Dazu sind kommerzielle Produkte erhältlich. Dies ermöglicht zwar ein biobasiertes Druckmaterial, allerdings verliert der Werkstoff Holz durch die für die Pulverisierung nötige Zerstörung der gewachsenen Massivholzstruktur wichtige Eigenschaften, nämlich das sehr gute Verhältnis von Festigkeit und Gewicht sowie die Anisotropie, die aus den gleichgerichteten durchgängigen Fasern des Holzes resultiert, welche einen Großteil der strukturellen Stabilität ausmachen.

Im Bereich des dreidimensionalen Auftragens von faser-basierten Materialen (Continuous Fiber Manufacturing CFM (vgl. WO 2017 085 649 A1) wie z.B. Karbon gibt es unterschiedliche Entwicklungen: Die US 4 707 212 beschreibt das sog. Automated Tape Laying (ATL) -Verfahren, die US 7 063 118 B2 beschreibt das Automated Fiber Placement (AFP) -Verfahren, die computergesteuerte Robotik verwenden, um eine oder mehrere Schichten von Kohlefaser-Tape auf eine Form zu legen, um ein Bauteil oder eine Struktur zu erzeugen. Typische Anwendungen umfassen die Fertigung von Flugzeugflügeln und Flugzeug- oder Bootsrümpfen.

Weiteren Stand der Technik zu diesem Thema bieten die US 4 351 688 A, die US 2007 004 4922 A und die US 7 407 556 B2.

Im Bereich von Holzprodukten, die aus mehreren Schichten verleimter Holzstreifen bestehen, sind noch massive Flächenelemente aus Brettsperrholz zu nennen. Dabei werden mehrere Schichten aus flächigen Holzlatten kreuzweise miteinander verleimt. Die einzelnen Schichten können mittels Roboter aufeinander platziert werden. Die Elemente werden dann anschließend mit Holzleim getränkt und in einem Vakuumsack miteinander verpresst. Ein ähnliches Verfahren wird auch zur Verarbeitung von Furnieren zu Furniersperrholzplatten verwendet, z.B. in der WO 2018 011 270 A1 und der US 2011 0291 441 A1.

Um die robotergestützte additive Fertigung eines Materials, also einen 3D-Druck zu ermöglichen, sind spezielle Werkzeuge und Apparaturen als Ergänzung des Roboters nötig, die auf die jeweiligen Material- und Prozessparameter abgestimmt sind. Solche Werkzeuge bzw. Apparaturen sind für Massivholz nicht bekannt, weshalb es bisher nicht möglich ist, die Vorteile von Massivholz mit den Vorteilen des 3D-Drucks miteinander zu vereinen.

Aus der US 2016/0332369 A1 ist ein Verfahren zur Herstellung von dreidimensionalen Bauteilen bekannt, wobei mehrere Streifen, beispielsweise auch aus Holz bereitgestellt werden, die eine an sich starre Struktur aufweisen, und die Holzstreifen aus verschiedenen Breiten werden auf jeweiligen Rollen aufgebracht. Um ein 3-dimensionales Bauteil herzustellen, werden die verschiedenen Breiten auf den jeweiligen Rollen in Kassetten zur Verfügung gestellt, und anschließend werden die verschiedenen Breiten aufeinander abgelegt. So wird die Hüllkontur eines Bauteils aus der Breite des jeweiligen Streifens definiert. Die Streifen werden vor dem Aufeinander-Ablegen in der Länge geschnitten, sodass auch die Kontur des Bauteils in Längsrichtung der Streifen bereits im Wesentlichen der Endkontur entspricht. Als ein finaler Schnitt wird der dreidimensionale Körper mit einem spanenden Verfahren bearbeitet, um die Trockenstruktur, die durch die verschiedenen Streifen, beispielsweise aus Holz, entstanden ist, zu glätten. Damit schlägt dieses Dokument eine Herstellung von dreidimensionalen Bauteilen vor, die insbesondere für große Serien vorteilhaft ist, und Massivbauteile, insbesondere aus Holz, müssen nicht mehr mit großen Zerspanvolumina hergestellt werden, sondern die Kontur des Bauteils kann mit der Dimensionierung der Streifen, insbesondere aus Holz, vordefiniert werden, sodass schließlich nur noch die Endkontur durch ein spanendes Verfahren endbearbeitet werden muss. Die Holzstreifen sind jedoch starr ausgeführt und insbesondere nicht in beiden Richtungen quer zu ihrer Längserstreckung flexibel. Somit können diese auch nicht unter Bildung von Radien verlegt werden, wodurch die Flexibilität, insbesondere bei der freien Gestaltung der zu schöpfenden dreidimensionalen Form stark eingeschränkt ist. Insbesondere bei der freien Gestaltung und Herstellung von Bauteilen der Stückzahl 1 ist dieses Verfahren nicht geeignet, da die auf den Spulen aufgerollten Streifen eine große Länge aufweisen sollen, um möglichst viele Bauteile gleichermaßen herzustellen.

Aufgabe der Erfindung ist es, die Verarbeitung von Massivholz in einem additiven dreidimensionalen Herstellungsprozess zu ermöglichen, um Bauelemente mit minimalem Materialeinsatz und mit größtmöglicher Effizienz herstellen zu können.

Diese Aufgabe wird mit einem Verfahren zur additiven Herstellung von räumlichen Bauteilen aus Holz gelöst, das wenigstens die folgenden Schritte umfasst:
a) serielles Verbinden von zuvor aus Ästen oder Stämmen geschnittenen Massivholzstreifen zu einem Endlosstrang aus Massivholz, wobei die Massivholzstreifen (2) vorzugsweise einen quadratischen oder rechteckigen Querschnitt aufweisen, sodass diese eine Biegsamkeit in zwei Raumrichtungen quer zu ihrer Längserstreckung aufweisen,
b) schichtweises additives Auftragen des Endlosstrangs auf einer Form oder auf zuvor aufgebrachte Schichten aus Massivholz unter Verkleben mit einem benachbarten Endlosstrang und
c) Abschneiden des Endlosstrangs an einer Bauteilgrenze.

Das Verfahren geht also im Schritt a) von einem Massivholzstreifen aus, also von einem Strang aus gewachsenem Holz. Der Massivholzstreifen bietet die typischen Holzeigenschaften, also eine Anisotropie in Streifenlängsrichtung und damit eine hohe Längsfestigkeit gepaart mit einer hohen Flexibilität. Der Massivholzstreifen wird mit weiteren Massivholzstreifen zu einem Endlosstrang aus Massivholz verbunden, in dem die Eigenschaften des einzelnen Massivholzstreifens erhalten bleiben. Der Massivholzstreifen weist vorzugsweise einen quadratischen oder rechteckigen Querschnitt auf Und seine Querschnittsdimensionen verleihen diesem eine Biegsamkeit in zwei Raumrichtungen quer zu seiner Längserstreckung unter Beibehaltung der hohen Längsfestigkeit, die seiner Verarbeitbarkeit zugutekommt und dem späteren Holzbauteil hohe Festigkeit verleiht.

Anschließend wird der Endlosstrang bzw. dessen sich gerade in Verarbeitung befindlicher Abschnitt in Schritt b) auf einer Form oder Stützstruktur aufgebracht, wenn er eine Bauteilgrenze bildet, oder auf eine zuvor aufgebrachte Schicht aus Massivholz, die ihrerseits durch Aufbringen des Endlosstrangs gebildet wurde. Zugleich mit dem Auftragen bzw. Positionieren des Endlosstrangs wird er mit einem benachbarten Endlosstrang bzw. einem oder mehreren Abschnitten des oder mehrerer Endlosstränge verklebt. Derartige benachbarte Abschnitte können bezüglich einer Verarbeitungsrichtung beim Aufbringen vertikal unterhalb und/oder horizontal daneben liegen.

Schließlich wird der Endlosstrang in Schritt c) bedarfsgerecht abgeschnitten, regelmäßig an einer Bauteilgrenze oder einem Endpunkt der Legestrecke. Dabei muss es sich nicht zwingend um eine sichtbare Grenze des fertigen Bauteils handeln, sondern sie kann auch durch eine z.B. verdeckte Kante o.ä. definiert sein.

Das verwendete Druckmaterial "Massivholz" ist biobasiert und einfach und wirtschaftlich herstellbar. Dem Verfahren gelingt es durch die Nutzung von Massivholz, die Vorteile von Holzfasern zu nutzen, ohne in aufwändigen Prozessen Fasern zu gewinnen, aufzuarbeiten und zu einem neuen Faden z.B. zu spinnen. Die Erfindung wendet sich erst recht davon ab, die anisotrope Holzstruktur zu zerstören, Holz z. B. zu pulverisieren und mit Polymeren zu vermischen, wie es bei herkömmlichen Produkten und Verfahren, beispielsweise bei FDM-Holzfilamenten geschieht. Sie verfolgt vielmehr das Prinzip, die Holzfasern des Ausgangsmaterials intakt und in ihrer anisotropen Ausrichtung der Massivholzstruktur zu erhalten und mit ihnen die positiven Eigenschaften von Massivholz in das hergestellte Bauteil zu übertragen.

Der additive Herstellungs- oder 3D-Druckprozess ermöglicht darüber hinaus planare, gekrümmte flächige oder hohlprofilige Bauteile sowie dreidimensionale Gitterstrukturen. Deren strukturelle Eigenschaften lassen sich durch das gezielte strangweise Aufbringen des Endlosstrangs genau definierten. Im Vergleich zu Produkten aus Schichtholz wie Brettsperrholz oder Furnierschichtholz sind die Einstellung und Kontrolle der Eigenschaften der 3D-gedruckten Massivholz-Bauteile in einer viel höheren Auflösung und Genauigkeit möglich. Dadurch können die Bauteileigenschaften im Maßstab von wenigen Millimetern konstruiert und Bauelemente mit minimalem Materialeinsatz und größtmöglicher Effizienz hergestellt werden. Zudem bietet das Verfahren im Gegensatz zu Brettsperrholzprodukten eine vielfach höhere geometrische Freiheit der dreidimensionalen Formgebung auch für komplexe Geometrien, wobei dafür keine Formen wie z.B. Pressgesenke oder dergleichen notwendig sind.

Die Herstellung des quasi endlosen Massivholzstrangs aus zuvor aus Ästen oder Stämmen geschnittenen Streifen als Grundmaterial lässt sich direkt verfahrens- und anwendungsspezifisch an den additiven, vorzugsweise robotischen Verarbeitungsprozess anbinden. Damit lassen sich eine besonders große Unabhängigkeit von geometrischen Vorgaben des Ausgangsmaterials Holz und ein hoher Freiheitsgrad in der Geometrie des herzustellenden Produktes und eine hohe Genauigkeit der Fertigung erreichen. Alternativ können die Herstellung des Endlosstrangs und seine Verarbeitung auch räumlich und zeitlich entkoppelt sein.

Mehrere Massivholzstreifen werden in Schritt a) zu einem Endlosstrang aus Massivholz gefügt. Nach einer vorteilhaften Ausgestaltung des Verfahrens kann das serielle Verbinden durch Holzverbindungen des Tischlers oder Zimmermanns wie einfaches oder doppeltes Schäften, durch Kleben spezifischer Fügegeometrien wie Nut-Feder-oder Nut-Falz-Geometrien oder solchen mit Hinterschnitten, die auch eine zusätzliche mechanische Verankerung der Teile beinhalten können, und durch klebendes Überblatten erfolgen.

Möglich ist auch ein schichtendes Kleben mehrerer Holzstreifen unter einem Versetzen der Schichten der Holzstreifen in Längsrichtung, sodass die Endlosigkeit nicht alleine über das Fügen der Stirnseiten erfolgt, sondern über das versetzte Schichten mehrerer Streifen. Dadurch kann der zur Verarbeitung bereitstehende Endlosstrang dicker sein als sein Ausgangsmaterial.

Alternativ zum Kleben kann das Verbinden durch Holzreibschweißen erfolgen, bei dem im Holz bereits vorhandenes "Bindemittel" durch einen Reibeprozess unter Druck aufgeschlossen und aktiviert wird. Während Kleben einen Klebstoffauftrag in der Regel auf die zu fügenden Flächen, also "innen" bedeutet, kann das Verbinden auch durch Ummanteln der Fügestelle mit haftendem Material, z.B. mit einem klebenden Film, Tape, Vlies oder dergleichen durch eine Haftung von "außen" erfolgen. Gegebenenfalls können die fügenden Verfahren eine chemische oder mechanische Vorbehandlung der zu verbindenden Oberfläche, z.B. mit Plasma, Laser oder durch Putzhobeln erfordern.

Auch eine Kombination aus den genannten Möglichkeiten zum seriellen Verbinden der einzelnen Massivholzstreifen ist denkbar.

Nach einer weiteren vorteilhaften Ausgestaltung des Verfahrens können vor oder nach dem Schritt b) die Querschnittsdimensionen des Massivholzstreifens oder des Endlosstrangs bearbeitet werden. Dazu bieten sich geeignete spanende Verfahren wie Sägen, Fräsen, Hobeln, Schleifen, Lasern, Messern, Sandstrahlen, Bohren, Drehen etc.an, um die Breite und/oder die Dicke des Massivholzstreifens oder des Endlosstrangs zu variieren. Dadurch können unterschiedliche Querschnitte des Massivholzstreifens hergestellt und - ggf. in demselben Bauteil - verarbeitet werden, z.B. um Belastungen gezielter aufzunehmen und den Materialeinsatz zu verringern. Die Reihenfolge der Bearbeitung, also das Verbinden der Massivholzstreifen und das Querschnittsbearbeiten, ist beliebig und kann beispielsweise Verfahrens- oder Verarbeitungsanforderungen angepasst werden.

Nach dem Verkleben von Holz, beispielsweise mit Leim, wird es regelmäßig verpresst, damit eine möglichst dünne Klebstofffuge entsteht, das im Klebstoff enthaltende Wasser vom Holz aufgenommen wird und der eigentliche Klebstoff zu trocknen beginnen kann. Außerdem wird beim Pressen der Klebstoff in die Poren der Holzoberfläche gedrückt und dabei gleichsam mit dem Werkstoff verzahnt. Nach einer weiteren vorteilhaften Ausgestaltung der Erfindung kann daher in Schritt b) das Verkleben unter gleichzeitigem Verpressen des Endlosstrangs mit dem oder den benachbarten Massivholzstrang bzw. -strängen erfolgen. Dadurch kann ein Verpressen des fertigen oder ggf. nur halbfertigen Bauteils entbehrlich werden.

Der Endlosstrang bietet - im Verhältnis zu herkömmlichen Materialien - eine weitaus größere Bandbreite an Verarbeitungsmöglichkeiten. Nach einer weiteren vorteilhaften Ausgestaltung der Erfindung kann der Endlosstrang in Schichten aus parallel nebeneinander oder in einem Winkel zueinander liegenden Endlossträngen additiv verarbeitet werden, wobei die Erstreckungsrichtung der Endlosstränge auch in unterschiedlichen Schichten in einem Winkel zueinander stehen können.

Der Endlosstrang kann in mehreren Ebenen oder gekrümmten Schichten übereinander aufgebracht werden. Er kann in einer Schicht parallel aneinanderreihend oder additiv verarbeitet werden, wobei die Strangrichtungen nebeneinander liegender Endlosstränge zum Beispiel aus Stabilitätsgründen von Schicht zu Schicht in einem Winkel zueinander stehen können. Alternativ können die Richtungen der Endlosstränge auch innerhalb derselben Schicht in einem Winkel zueinander verlaufen.

Seine schlanke und daher flexible Strangform ermöglicht eine Verarbeitung des Endlosstrangs nicht nur in einer Ebene, sondern auch in Raumkurven, so dass die Ausbildung von Körpern mit stark, mehrmals und in unterschiedlichen Raumrichtungen gekrümmten Flächen möglich ist. So kann etwa ein Hohlkörper aus Holz mit filigranen Strukturen oder sphärischen Flächen hergestellt werden, der eine hohe mechanische Festigkeit aufweist.

Die unbeschränkte Längsabmessung des Endlosstrangs erlaubt die Herstellung von ungestörten Massivholzoberflächen. Denn nach einer weiteren vorteilhaften Ausgestaltung der Erfindung kann der Endlosstrang von einer Bauteilgrenze bis zu einer gegenüberliegenden Bauteilgrenze desselben Bauteils reichend aufgebracht werden. Durchgehende Stoßstellen oder sonstige störende Fügestellen des Massivholzes, die optische Nachteile oder eine beschränkte Belastbarkeit bedeuten könnten, lassen sich mit dem erfinderischen Verfahren vermeiden.

Das Verfahren erlaubt nicht nur die Herstellung massiver plattenförmiger Bauteile, sondern auch die von Volumenkörpern, insbesondere solchen mit gekrümmten Oberflächen, von im Verhältnis zu ihrer Tragfähigkeit leichten und daher materialeffizienten Hohlbauteilen aus Massivholz und sogar die Herstellung von dreidimensionalen Gitterstrukturen aus Massivholz.

Nach einer weiteren vorteilhaften Ausgestaltung der Erfindung kann der Klebstoffauftrag zum Verkleben der Endlosstränge untereinander unmittelbar vor der Ablage des aktuell verarbeiteten Endlosstrangs in seiner Endlage oder durch Imprägnieren des Endlosstrangs mit Klebstoff vor dem Schritt b) erfolgen. Der Endlosstrang kann also schon vorher mit Klebstoff versehen, z.B. imprägniert worden sein, um den Verarbeitungsschritt des Aufbringens des Endlosstrangs zu vereinfachen. Geeignete Klebstoffe zum Vorabbeschichten sind z.B. Kontaktklebstoffe wie "3M Scotch-Weld 10", "Universal Contact Adhesive - Sprayable", "Duro Spray Premium Contact Adhesive BlueGrip DS 775" oder "UHU Contact Adhesive - Liquid" oder thermosensitive Klebstoffe wie z.B. "PU-Dispersion Thermal Activated Glue - Jowapur 150.00". Bei thermosensitiven Klebstoffen wird der bereits behaftete Endlosstrang dem dreidimensional verfahrbaren Arbeitskopf zugeführt und aufgeheizt, wodurch der Klebstoff kurz vor dem Auftrag des Endlosstranges auf den bereits fertigen Teil des Holzbauteils oder bei Beginn auf einer Arbeitsplatte aktiviert wird.

Alternativ kann der Klebstoff erst am Verarbeitungsort des Endlosstrangs zugeführt werden, z.B., wenn nur geringe Klebstoffmengen eingesetzt werden sollen. Geeignete Klebstoffe dafür sind z.B. schnelle 2-komponentige Klebstoff-Systeme oder Schmelzklebstoffe und UV-Klebstoffe, z.B. "DELO Photo Bond 4436 (UV Activated Glue)".

Nach einer weiteren vorteilhaften Ausgestaltung der Erfindung kann das Verfahren maschinell und automatisiert durchgeführt werden, insbesondere mithilfe einer robotischen Werkzeugmaschine, beispielsweise ein mit einer CNC-Steuerung ausgeführter mehrachsiger Roboter. Dadurch können hohe Stückzahlen an erstellten Bauteilen in immer der gleichen hohen Qualität erzielt werden.

Das Ausgangsmaterial des Endlosstrangs sind vorgefertigte Streifen aus Massivholz heimisch nachwachsender Hölzer, beispielsweise Weidenholz, Fichtenholz, Kiefernholz, Buchenholz oder Lindenholz. Daraus hergestellte Bauteile entstehen folglich mit geringer ökologischer Belastung. Um die Vorteile von Fasern zu nutzen, entfällt durch die Nutzung von Massivholz im Vergleich zu sonst in faserbasierten additiven Herstellungstechniken verwendeten Fasern wie Karbon- oder Glasfasern der Prozess, Fasern zu gewinnen, aufzuarbeiten und zu einem neuen Faden z.B. zu spinnen, da Massivholz bereits aus anisotrop gerichteten Fasern besteht. Der Endlosstrang hat beispielsweise eine Breite von etwa 1 bis 10 mm und eine Dicke von etwa 0,3 bis 1 mm, damit der Endlosstrang noch in zwei Raumrichtungen flexibel abgelegt werden kann. Die Dimensionen des Endlosstranges liegen insofern also etwa im Dickenbereich von Mikrofurnier, allerdings ist dieser erheblich schmaler. Die Länge des Massivholzstreifen Ausgangsmaterials liegt bei beispielsweise ca. 0,5 bis 2 m. Das Ausgangsmaterial umfasst im Wesentlichen alle Lignocellulose - Materialien, also verholze Pflanzen jeglicher Art, wie auch beispielsweise Bambus oder Rattan, insbesondere denen durch Spanabtrag ein rechteckiger oder trapezförmiger Querschnitt verliehen werden kann.

Der Endlosstrang aus Massivholz entsteht aus seriellen Verbindungen der langgestreckten Massivholzabschnitte durch Kleben mit stumpfen und/oder schrägen Stößen, insbesondere von Nut-Feder- oder Nut-Falz-Verbindungen, Schäften, Überblatten, Holzreibschweißen oder durch schichtendes Kleben mehrerer Holzstreifen unter einem versetzten Schichten mehrerer Holzstreifen, wie oben bereits detailliert beschrieben. Die unterschiedlichen Herstellungsmöglichkeiten lassen sich dem Endlosstrang zumindest mikroskopisch ansehen und auch noch im fertigen Bauteil nachweisen.

Das Ergebnis der Erfindung ist ein Holzbauteil, insbesondere als Volumenbauteil, Hohlbauteil oder dreidimensionale Gitterstruktur, aus Schichten von parallel nebeneinander oder in einem Winkel zueinander angeordneten und miteinander verklebten Endlossträngen aus Massivholz, wie sie zuvor beschrieben wurden, und/oder hergestellt in dem oben detailliert beschriebenen Verfahren.

Die Erfindung wird nachfolgend anhand der Figuren beispielhalber noch näher erläutert. Die Figuren zeigen:
- Figur 1:: einen ersten prinzipiellen Aufbau für eine Herstellungs- und Verarbeitungsvorrichtung,
- Figur 2:: Beispiele für Bauteile, die mit dem Verfahren hergestellt sind;
- Figur 3:: eine schematische Ansicht eines Arbeitskopfs zur Ausführung des Verfahrens und
- Figur 4:: einen weiteren prinzipiellen Aufbau für eine Verarbeitungsvorrichtung.

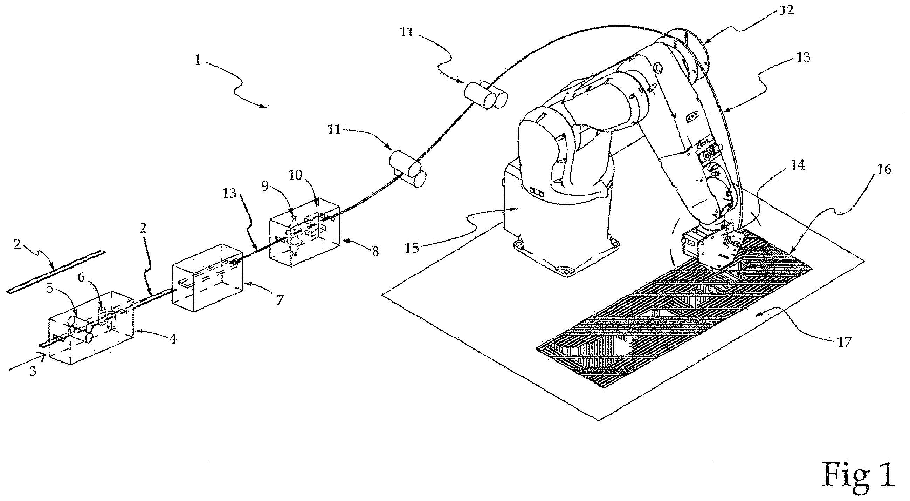

Figur 1 zeigt einen ersten prinzipiellen Aufbau einer robotergestützte Anlage 1 als durchgängige Herstellungs- und Verarbeitungsvorrichtung eines Endlosstrangs 13 eines Massivholzfadens. Diese setzt sich im Wesentlichen aus zwei Vorrichtungen, der Vorrichtung zur Querschnittsbearbeitung 4 und der Fügevorrichtung 7 für die Herstellung des Endlosstrangs 13, und einen mehrachsigen Roboter 15 für die Verarbeitung des Endlosstrangs 13 zusammen.

Das Ausgangsmaterial des Endlosstrangs 13 sind vorgefertigte Massivholzstreifen 2, beispielsweise in einer Breite von etwa 2 bis 8 mm und einer Dicke von etwa 0,5 bis 0,8 mm und einer Länge von etwa 0,5 bis 2 m. Sie lassen sich aus heimischem Vollholz gewinnen, beispielsweise aus Weidenholz. Aufgrund der geringen Abmessungen in Breite, Dicke und Länge kann es auch aus Bearbeitungsresten z.B. der Möbelindustrie gewonnen werden, so dass dafür nicht eigens Holz geschlagen werden muss.

In einem ersten Herstellungsschritt wird der Massivholzstreifen 2 in Einführrichtung 3 in eine Vorrichtung 4 zur Querschnittsbearbeitung eingeführt. Sie dient dazu, die Streifen 2 auf einen einheitlichen Querschnitt oder ggf. auf einen bestimmten, verarbeitungstechnisch erforderlichen Querschnitt zu bringen. Ggf. können auch unterschiedliche Querschnitte erzeugt werden, um in demselben Bauteil verarbeitet zu werden, wenn es aus geometrischen, statischen oder dynamischen Gründen des herzustellenden Bauteils erforderlich ist.

Für die Querschnittsbearbeitung eignen sich spanende Verfahren wie z.B. Sägen, Fräsen, Hobeln, Schleifen, Lasern, Messern, Sandstrahlen, Bohren oder Drehen. Aufeinanderfolgende Streifen 2 werden in der Vorrichtung 4 folglich in Höhe und Breite homogenisiert, um später einen kontinuierlichen Endlosstrang 13 ohne Querschnittsabweichungen, insbesondere ohne Querschnittssprünge an Fügestellen zwischen einzelnen Streifen 2 zu erhalten.

Anschließend gelangen die bearbeiteten, noch einzelnen Streifen 2 nacheinander in eine Fügevorrichtung 7. Dort werden sie miteinander und in ihrer Erstreckungsrichtung hintereinander seriell verbunden, so dass ein quasi endloser Massivholzfaden 13 entsteht. Geeignete fügende Verfahren können an sich, nämlich aus dem Tischler- oder Zimmermannshandwerk bekannte Verfahren sein, z.B. doppeltes Schäften, Kleben mit stumpfen und schrägen Stößen, Überblatten, Kleben von spezifischen Fügegeometrien wie Nut-Feder- oder Nut-Falz-Geometrien, Holzreibschweißen, schichtendes Kleben oder Kombinationen aus den genannten Möglichkeiten. Die fügenden Verfahren können auch chemische oder mechanische Vorbehandlungen der zu verbindenden Oberfläche erfordern, z.B. mit Plasma, Laser oder durch Putzhobeln.

Die Reihenfolge der Bearbeitung in den Vorrichtungen 4 und 7 ist an sich beliebig, diese kann also zum Beispiel nach Erfordernissen des späteren Verarbeitungsverfahrens gewählt werden.

Anschließend wird der Endlosstrang 13 einer Beschichtungsvorrichtung 8 zugeführt, in der dieser mit Klebstoff imprägniert wird.

Nach Verlassen der Beschichtungseinrichtung 8 führen paarweise einander gegenüberliegende Transportrollen 11 den imprägnierten Endlosstrang 13 einer Spule 12 am Roboter 15 zu. Von dieser aus gelangt der Endlosstrang 13 in einen Arbeitskopf bzw. Endeffektor 14 des Roboters 15, der den Endlosstrang 13 auf einer Arbeitsplatte 17 zu einem plattenförmigen Bauteil 16 verarbeitet. Der Endlosstrang 13 wird dazu additiv in Schichten parallel aneinanderreihend verarbeitet, wobei die Strangrichtungen nebeneinander liegender Endlosstränge 13 aus Stabilitätsgründen von Schicht zu Schicht in einem Winkel zueinander stehen.

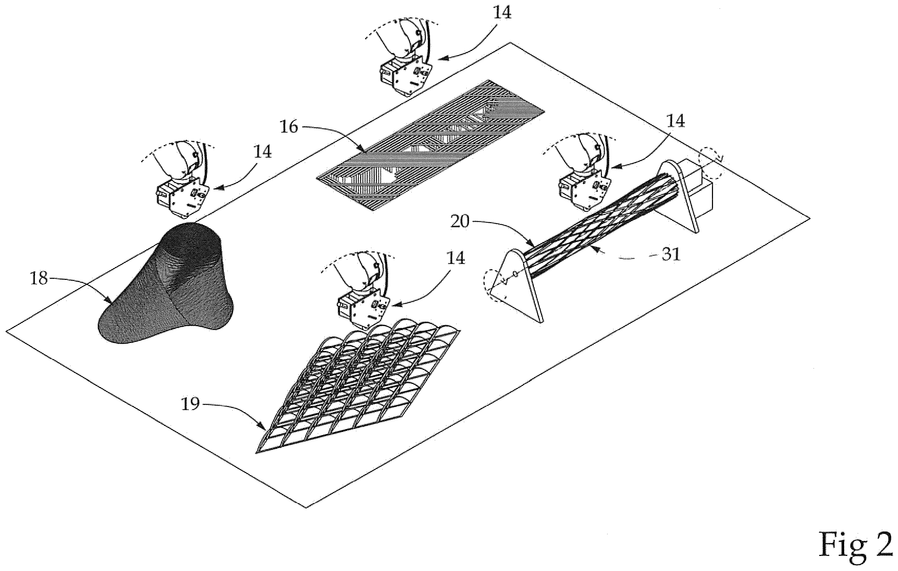

Figur 2 zeigt jeweils unter einem Arbeitskopf 14 Beispiele für mögliche Bauteile, nämlich neben dem plattenförmigen Bauteil 16 aus Figur 1 ein dreidimensionales massives Volumenbauteil 18 mit mehrfach gekrümmter Oberfläche, eine dreidimensionale Gitterstruktur 19 und ein Hohlbauteil 20. Das Volumenbauteil 18 entsteht aus mehreren übereinander aufgebrachten ebenen oder gekrümmten Schichten aus Endlossträngen 13. Die schlanke Strangform des Endlosstrangs 13 ermöglicht seine Verarbeitung nicht nur in einer Ebene, sondern auch in Raumkurven, so dass die Ausbildung von Körpern 18 mit starken, mehrfach und in unterschiedlichen Raumrichtungen gekrümmten Flächen möglich ist. Das Hohlbauteil 20 wird auf einem drehbar gelagerten Zylinder 31 aufgebaut, der sich synchron zu dem Bearbeitungsfortschritt des Arbeitskopfs 14 drehen lässt. Vor allem das Hohlbauteil 20 aus Massivholz kann zu einer hohen Materialeffizienz im Holzbau beitragen.

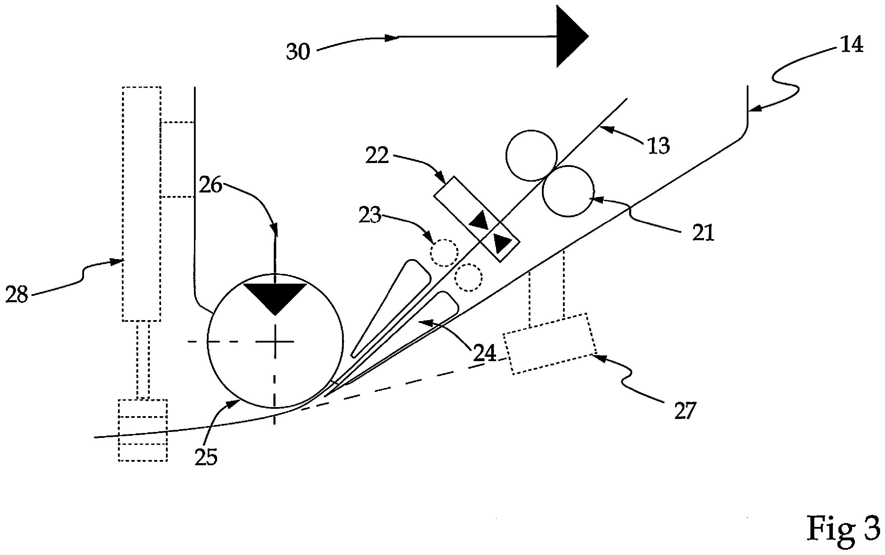

Figur 3 zeigt eine schematische Ansicht des Arbeitskopfs 14 bei einer Bewegung in einer Arbeitsrichtung 30. Er umfasst einen Extruder 21, nämlich zwei Spulen, die z.B. über eine Feder gegeneinander vorgespannt sind und den Endlosstrang 13 von der Spule 12 (Fig. 1) kommend mittels nicht dargestellter Schrittmotoren präzise und mit einer programmierten Geschwindigkeit transportieren. Die Geschwindigkeit des Vorschubs des Endlosstranges 13 entspricht der Bewegungsgeschwindigkeit des Arbeitskopfes 14 beim Auftragen des Endlosstrangs 13.

Dem Extruder 21 nachgeschaltet ist eine pneumatisch oder elektrisch angetriebene Schneidvorrichtung 22, an der der Endlosstrang 13 bei Bedarf abgeschnitten werden kann, beispielsweise entsprechend vor Erreichen einer Bauteilkante.

Alternativ zur Beschichtungsvorrichtung 8 kann im Arbeitskopf 14 ein Klebstoffspender 23 angeordnet sein, um den Endlosstrang 13 erst kurz vor seiner Verarbeitung mit geeignetem Klebstoff zu verbinden. Zum Klebstoffspender 23 gehört ein auf die Verarbeitungsstelle unter einer Andruckrolle 25 wirkender Aktivator 27 des Klebstoffs, der die Aktivierung und den Verbund des Klebstoffes über Hitze oder UV-Licht ermöglicht.

Eine geeignete Führung 24 führt den Endlosstrang 13 anschließend bis zur Andruckrolle 25, wo er unter ihrer Krafteinwirkung 26 auf eine Form oder auf zuvor applizierte Schichten aus Endlossträngen 13 aufgetragen wird. Für Gitterstrukturen ist am Arbeitskopf 14 noch optional zusätzlich ein z.B. pneumatisches Klammerwerkzeug 28 angeordnet, um die einzelnen Schichten zu verpressen.

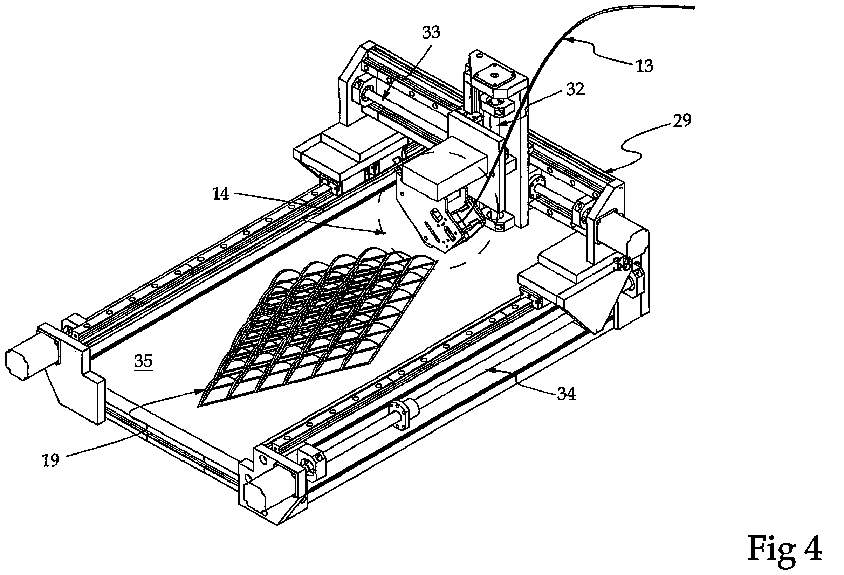

Figur 4 zeigt einen weiteren prinzipiellen Aufbau für eine Verarbeitungsvorrichtung des Endlosstrangs 13, die als dreiachsige CNC-Anlage 29 ausgebildet ist. Sie besitzt einen weitgehend gleich aufgebauten Arbeitskopf 14 wie die robotergestützte Anlage 1 gemäß Figuren 1 und 3. Auch die der Verarbeitung in der CNC-Anlage 29 vorgelagerte Herstellung des Endlosstrangs 13 kann wie in Figur 1 gezeigt angenommen werden.

Abweichend davon wird der Arbeitskopf 14 an einer Vertikalführung 32 in einer z- Achsrichtung auf- und abwärts bewegt. Die Vertikalführung 32 lässt sich an einer Querführung 33 in einer x- Achsrichtung orthogonal zur y- Achsrichtung horizontal verfahren. Eine Längsführung 34 schließlich erlaubt eine horizontale Verlagerung in Y-Richtung orthogonal zur x- und y- Achsrichtung in einer dritten Achse. Damit kann der Arbeitskopf 14 jede Position eines definierten Raums über einer Arbeitsfläche 35 anfahren, um nicht nur plattenförmige Bauteile 16, sondern auch Volumenkörper 18, leichte und effiziente Hohlbauteile 20 (vgl. Fig. 2) und dreidimensionale Gitterstrukturen 19 herzustellen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: robotergestützte Anlage
- 2: Massivholzstreifen
- 3: Einführrichtung
- 4: Vorrichtung zur Querschnittsbearbeitung
- 5: Höhenbearbeitung
- 6: Breitenbearbeitung
- 7: Fügevorrichtung
- 8: Beschichtungseinrichtung
- 9: Klebstoffbeschichtung
- 10: Klebstoffschnelltrocknung
- 11: Transportrollen
- 12: Spule
- 13: Endlosstrang
- 14: Arbeitskopf
- 15: mehrachsiger Roboter
- 16: Produkt, Holzbauteil
- 17: Arbeitsplatte
- 18: Volumenbauteil
- 19: Gitterstruktur
- 20: Hohlbauteil
- 21: Extruder
- 22: Schneidevorrichtung
- 23: Klebstoffspender
- 24: Führung
- 25: Andruckrolle
- 26: Kraftrichtung
- 27: Aktivator
- 28: Klammerwerkzeug
- 29: CNC-Anlage
- 30: Arbeitsrichtung
- 31: Zylinder
- 32: Vertikalführung
- 33: Querführung
- 34: Längsführung
- 35: Arbeitsfläche

## Patentansprüche

1. Verfahren zur additiven Herstellung von räumlichen Bauteilen (16, 18 ,19, 20) aus Holz mit den folgenden Schritten:
a) serielles Verbinden von zuvor aus Ästen oder Stämmen geschnittenen Massivholzstreifen (2) zu einem Endlosstrang (13) aus Massivholz, wobei die Massivholzstreifen (2) vorzugsweise einen quadratischen oder rechteckigen Querschnitt aufweisen, sodass diese eine Biegsamkeit in zwei Raumrichtungen quer zu ihrer Längserstreckung aufweisen,
b) schichtweises additives Auftragen des Endlosstrangs (13) auf einer Form oder auf zuvor aufgebrachte Schichten aus Massivholz unter Verkleben mit einem benachbarten Endlosstrang (13),
c) Abschneiden des Endlosstrangs (13) an einer Bauteilgrenze.

2. Verfahren nach Anspruch 1, **dadurch gekennzeichnet, dass** das serielle Verbinden in Schritt a) durch Kleben mit stumpfen und/oder schrägen Stößen, insbesondere von Nut-Feder- oder Nut-Falz-Verbindungen, Schäften, Überblatten oder Holzreibschwei-ßen oder durch schichtendes Kleben mehrerer Holzstreifen (2) in versetzten Schichten der Holzstreifen (2) erfolgt.

3. Verfahren nach Anspruch 1 oder 2, **dadurch gekennzeichnet, dass** vor oder nach dem Schritt b) eine spanende Bearbeitung insbesondere durch Sägen, Fräsen, Hobeln und Schleifen zur Herstellung von geeigneten Querschnittsdimensionen des Endlosstrangs (13) erfolgt.

4. Verfahren nach einem der obigen Ansprüche, **dadurch gekennzeichnet, dass** in Schritt b) das Verkleben unter gleichzeitigem Verpressen des Endlosstrangs (13) erfolgt.

5. Verfahren nach einem der obigen Ansprüche, **gekennzeichnet durch** eine additive Verarbeitung des Endlosstrangs (13) in Schichten aus parallel nebeneinander oder in einem Winkel zueinander liegenden Endlossträngen (13), deren Erstreckungsrichtung auch in unterschiedlichen Schichten in einem Winkel zueinander steht.

6. Verfahren nach einem der obigen Ansprüche, **dadurch gekennzeichnet, dass** der Endlosstrang von einer Bauteilgrenze bis zu einer gegenüberliegenden Bauteilgrenze desselben Bauteils reichend aufgebracht wird.

7. Verfahren nach einem der obigen Ansprüche, **dadurch gekennzeichnet, dass** Endlosstränge (13) insbesondere mittels des Schrittes b) zu Volumenbauteilen, Hohlbauteilen und dreidimensionalen Gitterstrukturen verarbeitet werden.

8. Verfahren nach einem der obigen Ansprüche, **gekennzeichnet durch** einen Klebstoffauftrag unmittelbar vor der Ablage des Endlosstrangs (13) in seiner Endlage oder durch Imprägnieren des Endlosstrangs (13) mit Klebstoff vor dem Schritt b).

9. Verfahren nach einem der obigen Ansprüche, **dadurch gekennzeichnet, dass** es maschinell durchgeführt wird, insbesondere mithilfe einer robotischen Werkzeugmaschine oder mittels eines mehrachsigen Roboters (15).

10. Holzbauteil (16, 18,19, 20), gebildet als Volumenbauteil (18), als Hohlbauteil (20) oder als dreidimensionale Gitterstruktur (19), aus Schichten von parallel nebeneinander oder in einem Winkel zueinander angeordneten und miteinander verklebten Endlossträngen aus Massivholz, hergestellt in einem Verfahren nach einem der Ansprüche 1 bis 9.

## Claims

1. A method for the additive production of spatial components (16, 18, 19, 20) made of wood, said method comprising the following steps:
a) serially connecting solid wood strips (2) cut beforehand from branches or logs to form a continuous strand (13) of solid wood, wherein the solid wood strips (2) preferably have a square or rectangular cross-section so that they have flexibility in two spatial extents transversely to their longitudinal extents;
b) additively applying the continuous strand (13) layer-wise to a mold or to previously applied layers of solid wood while adhesively bonding to an adjacent continuous strand (13);
c) cutting off the continuous strand (13) at a component boundary.

2. A method in accordance with claim 1, **characterized in that** the serial connection in step a) takes place by adhesive bonding to blunt and/or slanted joints, in particular of tongue and groove joints or tongue and fold joints, shafts, overlap joints, or wood friction welding, or by a layering adhesive bonding of a plurality of wood strips (2) in offset layers of the wood strips (2).

3. A method in accordance with claim 1 or claim 2, **characterized in that** a shape cutting takes place, in particular by sawing, milling, planing, and grinding, to manufacture suitable cross-sectional dimensions of the continuous strand (13) before or after step b).

4. A method in accordance with one of the preceding claims, **characterized in that** the adhesive bonding in step b) takes place while simultaneously pressing the continuous strand (13).

5. A method in accordance with one of the preceding claims, **characterized by** an additive processing of the continuous strand (13) in layers of continuous strands (13) that are disposed in parallel next to one another or at angles with one another and whose directions of extent are also at angles with one another in different layers.

6. A method in accordance with one of the preceding claims, **characterized in that** the continuous strand is applied reaching from one component boundary up to an oppositely disposed component boundary of the same component.

7. A method in accordance with one of the preceding claims, **characterized in that** continuous strands (13) are in particular processed by means of step b) to form volume components, hollow components, and three-dimensional lattice structures.

8. A method in accordance with one of the preceding claims, **characterized by** an adhesive application directly before the placing down of the continuous strand (13) in its end position or by impregnating the continuous strand (13) with adhesive prior to step b).

9. A method in accordance with one of the preceding claims, **characterized in that** it is carried out mechanically, in particular with the aid of a robot machine tool or by means of a multi-axial robot (15).

10. A wooden component (16, 18, 19, 20), formed as a volume component (18), as a hollow component (20), or as a three-dimensional lattice structure (19) , composed of layers of continuous strands of solid wood arranged in parallel next to one another or at angles with one another and adhesively bonded to one another, manufactured in a method in accordance with one of the claims 1 to 9.

## Revendications

1. Procédé de fabrication additive de composants (16, 18, 19, 20) tridimensionnels en bois comportant les étapes suivantes :
a) liaison en série de lamelles de bois plein (2) coupées auparavant à partir de branches ou de troncs pour former une bande continue (13) en bois plein, les lamelles de bois plein (2) présentant de préférence une section transversale carrée ou rectangulaire, de telle sorte qu'elles présentent une flexibilité dans deux directions dans l'espace, transversalement à leur direction longitudinale,
b) application additive par couches de la bande continue (13) sur un moule ou sur des couches en bois plein appliquées auparavant par collage avec une bande continue (13) voisine,
c) coupe de la bande continue (13) au niveau d'une limite de composant.

2. Procédé selon la revendication 1, **caractérisé en ce que** la liaison en série de l'étape a) est effectuée par collage avec des joints aboutés et/ou obliques, en particulier d'assemblages à rainure et languette ou à rainure et feuillure, assemblage en sifflet, assemblage à mi-bois ou soudage du bois par friction ou par collage par couches de plusieurs lamelles de bois (2) avec disposition en couches décalées des lamelles de bois (2).

3. Procédé selon la revendication 1 ou 2, **caractérisé en ce que**, avant ou après l'étape b), un usinage à enlèvement de copeaux est effectué, en particulier par sciage, fraisage, rabotage et ponçage, pour obtenir des dimensions appropriées de la section transversale de la bande continue (13).

4. Procédé selon l'une des revendications précédentes, **caractérisé en ce que**, à l'étape b), le collage est effectué avec compression simultanée de la bande continue (13).

5. Procédé selon l'une des revendications précédentes, **caractérisé par** une transformation additive de la bande continue (13) en couches de bandes continues (13) situées parallèlement les unes à côté des autres ou formant un angle les unes par rapport aux autres, dont les directions d'extension forment également un angle les unes par rapport aux autres dans des couches différentes.

6. Procédé selon l'une des revendications précédentes, **caractérisé en ce que** la bande continue est appliquée de façon à s'étendre d'une limite de composant à une limite de composant opposée du même composant.

7. Procédé selon l'une des revendications précédentes, **caractérisé en ce que** des bandes continues (13) sont transformées, en particulier au moyen de l'étape b), en composants volumiques, composants creux et structures en treillis tridimensionnelles.

8. Procédé selon l'une des revendications précédentes, **caractérisé par** une application de colle directement avant le dépôt de la bande continue (13) dans sa position finale ou par l'imprégnation de la bande continue (13) avec de la colle avant l'étape b).

9. Procédé selon l'une des revendications précédentes, **caractérisé en ce qu'**il est exécuté mécaniquement, en particulier à l'aide d'une machine-outil robotisée ou au moyen d'un robot multi-axes (15).

10. Composant en bois (16, 18, 19, 20), sous la forme d'un composant volumique (18), d'un composant creux (20) ou d'une structure en treillis tridimensionnelle (19), formé de couches de bandes continues en bois plein collées ensemble et agencées parallèlement les unes à côté des autres ou en formant un angle les unes par rapport aux autres, fabriqué par un procédé selon l'une des revendications 1 à 9.
